Europäisches Patentamt

European Patent Office

Office européen des brevets

(11) Veröffentlichungsnummer: **0 578 156 A2**

## (12) EUROPÄISCHE PATENTANMELDUNG

(21) Anmeldenummer: **93110640.5**

(51) Int. Cl.5: **H04B 7/015**

(22) Anmeldetag: **03.07.93**

(30) Priorität: **07.07.92 DE 4222236**

(43) Veröffentlichungstag der Anmeldung:
**12.01.94 Patentblatt 94/02**

(84) Benannte Vertragsstaaten:
**AT BE CH DE ES FR GB IT LI NL SE**

(71) Anmelder: **Alcatel SEL Aktiengesellschaft**
**Lorenzstrasse 10**
**D-70435 Stuttgart(DE)**

(72) Erfinder: **Buné, Paulus**
**Theodor-Heuss-Strasse 28**
**D-70806 Kornwestheim(DE)**

(74) Vertreter: **Brose, Gerhard et al**
**Alcatel SEL AG**
**Patent- und Lizenzwesen**
**Postfach 30 09 29**
**D-70449 Stuttgart (DE)**

(54) **Verfahren und Schaltungsanordnung zur Kompensation einer Doppler-Verschiebung.**

(57) Ein Mobilfunksignal zwischen einer Funkfeststation und einer sich relativ zu ihr bewegenden Mobilstation wird durch eine Dopplerverschiebung beeinflußt. Die Dopplerverschiebung kann einen sich abrupt ändernden Zeitverlauf aufweisen, der z.B. innerhalb des Bahnstreckenfunks bei einer Vorbeifahrt der Mobilstation an der Funkfeststation auftritt.

Bekannte Kompensationsverfahren zur direkten und indirekten Frequenzkorrektur, mittels Auswertung eines Frequenzkorrektur-Signals bzw. eine kontinuierliche Sendezeitregelung, können einer schnellen Änderung der Dopplerverschiebung (>1kHz/sec) nicht folgen.

Aufgabe der Erfindung ist es, ein Verfahren und eine Schaltungsanordnung (200) zur Kompensation einer Dopplerverschiebung in einem Mobilfunksignal (RCOM) bereitzustellen, das sich zwischen einer Funkfeststation (BTS) und einer an letzterer vorbeifahrenden Mobilstation (MS) ausbreitet.

Dies wird erzielt, indem mittels einer Auswertung des Mobilfunksignales (RCOM) prädiktive Kennwerte (xVAL) des zu erwartenden Zeitverlaufs (ADS) der Dopplerverschiebung bestimmt werden und, indem eine aus diesem Zeitverlauf abgeleitete, kompensierende Vorwärtsregelung eines Sende- und Empfangsteiles (TRC) des Mobilfunksignales (RCOM) erfolgt.

Rank Xerox (UK) Business Services
(3.10/3.6/3.3.1)

2

Start:
t, i = 0
TPthres, $f_c$
eingeben

Signallaufzeitwert
ermitteln:
TPi = ?

TPi < TP thres ?

JA

NEIN

TPi
speichern

$i = i + 1$
$t = t + T$

Zeitgradient
interpolieren z.B.:
gradTP =
(TP0 - TPi)/i.T.

Betrag bestimmen:
$fVAL = 2 \cdot f0 \cdot gradTP$

Eintrittszeitpunkt
extrapolieren z.B.
TVAL = TP0/gradTP

Vorwärtsregelung von TRC
mittels Zeitverlauf
$ADS(t) = \begin{cases} fVAL/2; & t<TVAL \\ -fVAL/2; & t \geq TVAL \end{cases}$

FIG. 3

Die Erfindung betrifft ein Verfahren nach dem Oberbegriff des Anspruchs 1 und eine Schaltungsanordnung nach dem Oberbegriff des Anspruchs 5.

Ein Mobilfunksignal zwischen einer Funkfeststation und einer sich relativ zu ihr bewegenden Mobilstation unterliegt dem Einfluß des Dopplereffektes, welcher im Frequenzbereich eine Dopplerverschiebung zwischen dem gesendeten Mobilfunksignal und dem empfangenen Mobilfunksignal bewirkt.

Die Dopplerverschiebung ist abhängig von der Fahrgeschwindigkeit und der Fahrtrichtung der Mobilstation, wodurch zeitliche Änderungen der Dopplerverschiebung auftreten können.

Um eine Dopplerverschiebung in einem Mobilfunksignal auszugleichen, sind Methoden bekannt, wie die in dem zweiteiligen Artikel "Digitale Funkübertragung im GSM-System (GSM: Global System for Mobile Communications)"aus "Funkschau" 1991, Heft 22, S. 68-74 und Heft 23, S. 77-78 beschriebenen Methoden.

In obigem Artikel wird von einer Funkübertragung nach dem Zeitvielfach-Zugriffsverfahren, dem sogenannten TDMA-Verfahren (TDMA: Time Division Multiple Access) ausgegangen. Zum Aufbau einer Funkverbindung zwischen einer Funkfeststation und einer Mobilstation sendet die Funkfeststation einen Frequenzkorrekturburst (Frequency-Correction Burst) aus, den die Mobilstation für eine Synchronisation auf die Frequenz der Funkfeststation detektiert. Bewegt sich die Mobilstation relativ zur Funkfeststation, so erfolgt obige Synchronisation auf eine Frequenz, die von der Frequenz der Funkfeststation um eine Dopplerfrequenz abweicht.

Nach einer anschließenden Zeitsynchronisation mit Hilfe eines Synchronisationsburst (Synchronization Burst) ist die Funkverbindung aufgebaut. Wie weiterhin beschrieben, wird, während die Funkverbindung besteht und sich die Entfernung zwischen Mobilstation und Funkfeststation ständig ändert, der Sendezeitpunkt der Mobilstation adaptiv nachgeregelt, um die Laufzeitänderung des Mobilfunksignales auszugleichen. Die aktuelle Laufzeit (Propagation Time) wird durch eine Zweiwegemessung mittels einer speziell verkürzten Informationsfolge (Random Access Burst) ständig ermittelt.

Die anhand des Frequenzkorrekturzeitschlitzes durchgeführte Frequenzsynchronisation bewirkt eine erste, grobe Kompensation der Dopplerverschiebung. Die kontinuierliche Überwachung des Sendezeitpunktes berücksichtigt die sich ändernde Entfernung zwischen Mobilstation und Funkfeststation und führt somit indirekt zu einer weiteren Kompensation der Dopplerverschiebung.

Bewegt sich nun die Mobilstation an der Funkfeststation vorbei, so ändert sich der Betrag und das Vorzeichen der Dopplerverschiebung. Derartige Zeitverläufe der Dopplerverschiebung, wie sie z.B. im Bahnstreckenfunk mit einer Frequenzänderung größer 1 kHz/sec auftreten, erfordern schnelle, aufwendige Algorithmen und Regelkreise beim Einsatz nach obigen, herkömmlichen Methoden.

Aufgabe der Erfindung ist es, ein Verfahren und eine Schaltungsanordnung zur Kompensation einer Dopplerverschiebung in einem Mobilfunksignal bereitzustellen, so daß auch dann noch eine Mobilfunkversorgung gewährleistet ist, wenn Mobilfunkstationen schnell an Funkfeststationen vorbeifahren.

Die Aufgabe wird erfindungsgemäß gelöst durch ein Verfahren nach der Lehre des Anspruchs 1 und eine Schaltungsanordnung nach der Lehre des Anspruchs 5.

Danach erfolgt die Kompensation der Dopplerverschiebung mittels einer Vorwärtsregelung, eines Sende- und Empfangsteils des Mobilfunksignals, die auf, zuvor aus dem Mobilfunksignal bestimmte, prädiktive Kennwerte zurückgreift, die wiederum den zu erwartenden Zeitverlauf der Dopplerverschiebung kennzeichnen.

Eine Nachregelzeit ist nicht zu berücksichtigen und schränkt den Einsatz der Erfindung zur Kompensation sich schnell ändernder Dopplerverschiebungen nicht ein.

Mit wachsender Änderungsgeschwindigkeit der Dopplerverschiebung vermindert sich die Anzahl der notwendigen Kennwerte, die den Zeitverlauf der Dopplerverschiebung kennzeichnen. So sind z.B. zur Charakterisierung eines sprungförmigen Zeitverlaufs (Dopplersprung) nur zwei Kennwerte (Betrag, Eintrittszeitpunkt) erforderlich. Zeitverläufe mit höherer Ordnung, d.h. mit einer stetigen, gleitenden Charakteristik, erfordern eine größere Anzahl notwendiger Kennwerte.

Die Erfindung stellt sich technisch umso einfacher dar, je abrupter der Zeitverlauf der zu kompensierenden Dopplerverschiebung ist.

Dies wird im folgenden anhand der Beschreibungen von vorteilhaften Weiterbildungen der Erfindung gemäß den Unteransprüchen erläutert.

Nach Anspruch 2 wird eine Dopplerverschiebung kompensiert, deren Zeitverlauf einem Dopplersprung entspricht, was zu dessen Charakterisierung nur die Bestimmung von zwei Kennwerten erfordert. Der Kennwert des Betrages und der Kennwert des Eintrittszeitpunktes des Dopplersprunges werden mittels des Mobilfunksignals bestimmt. Z.B. im Bahnstreckenfunk sendet die im Führerstand des Zuges befindliche Mobilstation die Geschwindigkeit VMS und die momentane Streckenposition sMS des Zuges an die Funkfeststation. Dort werden aus obigen Größen die Kennwerte des zu erwartenden Dopplersprungs wie

folgt bestimmt:

Betrag: fVAL = 2 . VMS . f0/c

Eintrittszeitpunkt: TVAL = (sMS - sBTS) / VMS

wobei

f0 die Trägerfrequenz des gesendeten Mobilfunksignales, c die Lichtgeschwindigkeitskonstante und sBTS die Streckenposition der Funkfeststation ist.

Die notwendigen Voraussetzungen für obige Methode, wie eine weitgehend konstante Geschwindigkeit VMS und ein geradliniger Streckenverlauf dicht an der Funkfeststation vorbei, sind z.B. im Bahnstreckenfunk gegeben.

Nach Anspruch 3 werden die zwei Kennwerte des Dopplersprunges (Betrag und Eintrittszeitpunkt) aus einer Signallaufzeit des Mobilfunksignales abgeleitet. Dies ist besonders in Mobilfunksystemen vorteilhaft, wie z.B. dem GSM-System, wo die Signallaufzeit des Mobilfunksignales zwischen der Mobilstation und der Funkfeststation bereits in einer systemeigenen Routine ermittelt wird. In dem zuvor beschriebenen GSM- System wird die Signallaufzeit fortlaufend gemessen und zur Überwachung des Sendezeitpunktes der Mobilstation herangezogen.

Die Signallaufzeit wird gemäß Anspruch 2 ausgewertet, bis sie unter einen Schwellwert abgesunken ist. Somit wird der Zeitraum zur Auswertung der Signallaufzeit genutzt, in dem die Mobilstation sich der Funkfeststation bis auf einen, durch den Schwellwert bestimmten Mindestabstand nähert.

Durch die Größe des Schwellwertes wird die zu einer Bestimmung der Kennwerte benötigte Zeit festgelegt, so daß eine Kompensation des Dopplersprunges mittels obiger Kennwerte rechtzeitig nach Art einer Vorwärtsregelung erfolgt.

Aus der Signallaufzeit wird eine Folge von Signallaufzeitwerten gebildet und abgespeichert, die Momentanwerte der Signallaufzeit darstellen. Diese können in dem beschriebenen GSM-System auch direkt abgefragt werden.

Mittels Interpolation (z.B. lineare Regression) der abgespeicherten Signallaufzeitwerte wird ein Zeitgradient gradTP der Signallaufzeit bestimmt, aus dem über die Geschwindigkeit VMS der Mobilstation ein Kennwert fVAL als Betrag des Dopplersprunges ermittelt wird:

$$fVAL = 2 . VMS . f0 / c ,$$

$$VMS = c . grad\ TP .$$

Ein weiterer Kennwert TVAL als Eintrittszeitpunkt des Dopplersprunges wird vorteilhaft mittels einer Extrapolation der gespeicherten Signallaufzeitwerte bestimmt. So bestimmt der Schnittpunkt einer durch die Signallaufzeitwerte gelegten Geraden mit der Zeitachse den gesuchten Eintrittszeitpunkt.

Nach Anspruch 4 werden drei prädiktive Kennwerte bestimmt, die einen rampenförmigen Zeitverlauf der Dopplerverschiebung vollständig charakterisieren. Diese Methode ist z.B. vorteilhaft anwendbar, falls die Funkfeststation in einem Mindestabstand Dmin zu einer Fahrstrecke der Mobilstation positioniert ist, so daß die Dopplerverschiebung zeitlich nach Art eines nichtidealen Dopplersprungs mit einer endlichen Steigung verläuft. Der erste Kennwert fVAL des Betrages und der zweite Kennwert TVAL des Eintrittszeitpunktes können z.B. wie vorher beschrieben anhand der Signallaufzeit des Mobilfunksignales ermittelt werden. Die Steigung wird durch den dritten Kennwert grad fVAL gekennzeichnet, der sich dann wie folgt bestimmen läßt:

$$
\begin{aligned}
\mathbf{grad\ fVAL} &= \mathbf{VMS . VMS . f0/c . Dmin} \\
&= \mathbf{c . grad\ TP . c . grad\ TP . f0/c . Dmin} \\
&= \mathbf{c . grad\ TP . grad\ TP . f0/Dmin.}
\end{aligned}
$$

Im folgenden wird die Erfindung anhand von Ausführungsbeispielen und unter Zuhilfenahme der beiliegenden Zeichnungen weiter erläutert.

Fig. 1 zeigt eine Mobilstation, die sich einer Funkfeststation nähert, und einen Zeitverlauf einer Dopplerverschiebung, der bei einer Vorbeifahrt zu erwarten ist.

Fig. 2 zeigt eine sehr ortsnahe Vorbeifahrt einer Mobilstation an einer Funkfeststation, den Zeitverlauf der Signallaufzeit des Mobilfunksignals und den daraus abgeleiteten Zeitverlauf eines Dopplersprunges.

Fig. 3    zeigt ein Flußdiagramm eines Doppler-Kompensations-Verfahrens mittels Signallaufzeit-Auswertung,

Fig. 4    zeigt eine Vorbeifahrt in Distanz, den Zeitverlauf der Signallaufzeit und den daraus abgeleiteten, rampenförmigen Zeitverlauf einer Dopplerverschiebung,

Fig. 5    zeigt eine Schaltungsanordnung zur Durchführung einer Doppler-Kompensation mittels Signallaufzeit-Auswertung.

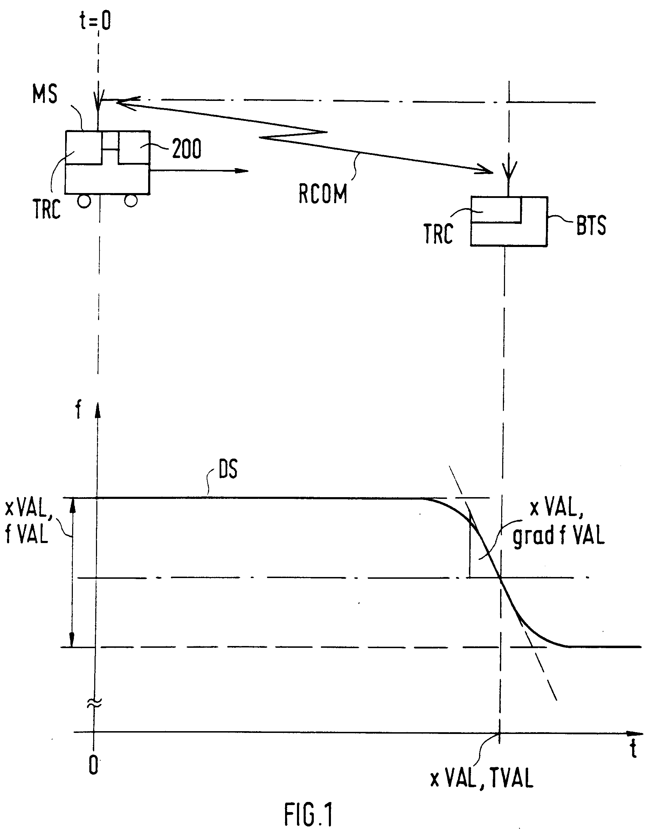

Die Fig. 1 soll übersichtlich einen Einsatz einer erfindungsgemäßen Schaltungsanordnung 200 aufzeigen. Konkrete Ausführungsformen der Erfindung werden später anhand der weiteren Figuren erläutert.

Die Fig. 1 zeigt eine Situation einer Annäherung einer Mobilstation MS an eine Funkfeststation BTS zu einem Zeitpunkt t = 0 und die Fig. 1 zeigt einen Zeitverlauf DS einer Dopplerverschiebung in einem Mobilfunksignal RCOM zwischen der Mobilstation und der Funkfeststation, der bei einer Vorbeifahrt zu erwarten ist und durch mehrere Kennwerte xVAL gekennzeichnet ist. Diese Kennwerte werden innerhalb der Schaltungsanordnung 200, welche mit einem Sende- und Empfangsteil TRC der Mobilstation verbunden ist, aus dem Mobilfunksignal RCOM ermittelt und kennzeichnen z.B. einen Betrag fVAL der maximalen Dopplerverschiebungs-Differenz, eine Steigung grad fVAL der größten Dopplerverschiebungs-Änderung und einen Eintrittszeitpunkt TVAL, zu dem diese Steigung auftritt.

Die Kennwerte, die während der Annäherung der Mobilstation an die Funkfeststation bestimmt werden, legen den erwarteten Zeitverlauf DS der Dopplerverschiebung fest, so daß die Schaltungsanordnung 200 das Sende- und Empfangsteil TRC der Mobilstation rechtzeitig, entsprechend dem Zeitverlauf, steuert und die Dopplerverschiebung kompensiert. Die Kompensation erfolgt z.B. durch eine Abstimmung einer Oszillatorfrequenz in einer Mischstufe des Sende- und Empfangsteils. Die Kompensation kann jeweils im Empfänger oder jeweils im Sender der Mobilstation und der Funkfeststation vorgenommen werden, so daß in beiden Stationen mittels einer Schaltungsanordnung geregelt wird. Die Kompensation der Dopplerverschiebung kann andererseits auch nur in einem Sende- und Empfangsteil, d.h. im Sender und Empfänger einer Station, erfolgen, so daß nur eine Schaltungsanordnung eingesetzt zu werden braucht.

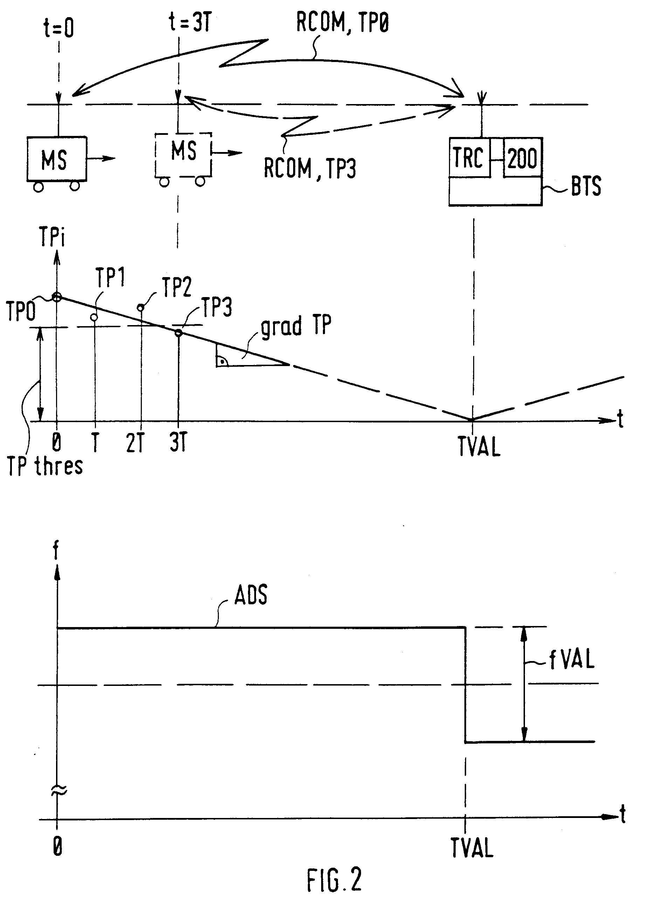

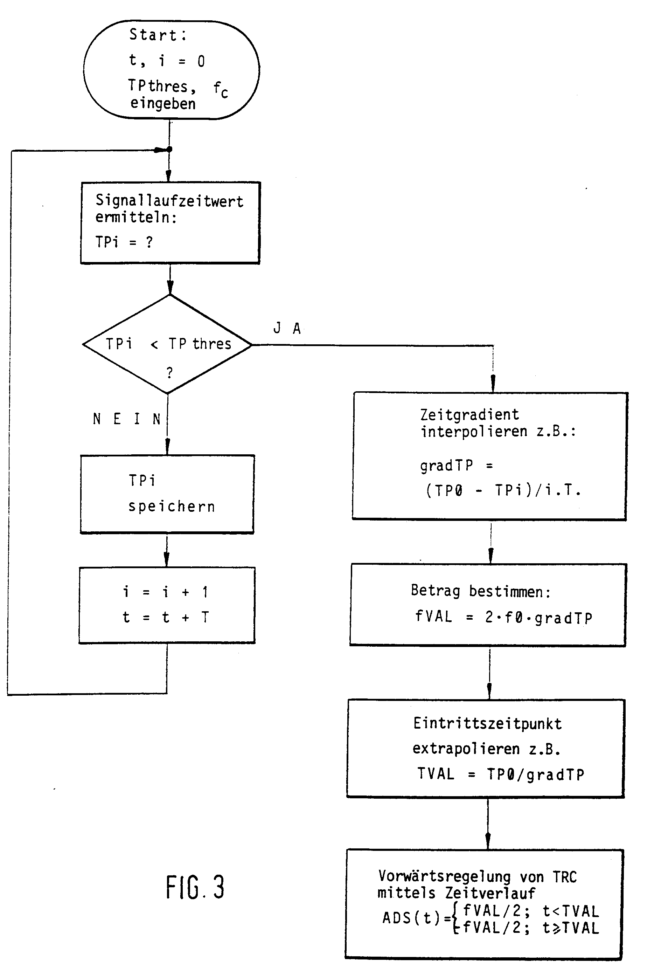

Im folgenden werden konkrete Ausführungsformen der Erfindung erläutert: Die Fig. 2 und die Fig. 3 zeigen Zeitverläufe bzw. ein Flußdiagramm zur Verdeutlichung einer erfindungsgemäßen Kompensation eines Dopplersprungs.

Die in der Fig. 2 dargestellte Mobilstation MS bewegt sich auf die Funkfeststation BTS zu, wobei ein Zeitpunkt t = 0 und ein späterer Zeitpunkt t = 3T zeichnerisch dargestellt sind. Das Mobilfunksignal RCOM, zwischen der Mobilstation und der Funkfeststation, breitet sich mit einer zunächst abnehmenden Signallaufzeit aus, die in Zeitabständen T abgefragt wird und entsprechend unterschiedliche Signallaufzeitwerte TPi aufweist.

Innerhalb des bereits erwähnten GSM-Systems wird die Signallaufzeit im Abstand eines TDMA-Zeitrahmens neu ermittelt, so daß in Zeitabständen von etwa T = 4,6 ms der aktuelle Signallaufzeitwert abgefragt werden kann. In diesem Zeitabstand würde eine Mobilstation mit einer großen Fahrgeschwindigkeit von z.B. 300 km/h nur etwa 38 cm Wegstrecke zurücklegen. Wird ein größerer Zeitabstand gewählt, wie z.B. T = 46 ms, so daß im Abstand von 10 TDMA-Zeitrahmen ein Signallaufzeitwert TPi abgefragt wird, ist dies ausreichend für die Auswertung des zeitlichen Verlaufs der Signallaufzeit und zur Bestimmung von Kennwerten (fVAL, TVAL) eines zu erwartenden Dopplersprungs ADS.

Durch die Wahl des Zeitabstandes T und die Bestimmung eines Schwellwertes TPthres, der festlegt, wann die Ermittlung von Signallaufzeitwerten TPi abgebrochen wird, ist eine Beschränkung der Anzahl der ermittelten und abgespeicherten Signallaufzeitwerte (hier z.B. TP0 ... TP3) möglich. Somit kann eine schnelle Auswertung zur Bestimmung der Kennwerte erfolgen und eine verbleibende Zeitspanne gewährleistet werden, die zur Kompensation des durch die Kennwerte, wie Betrag fVAL und Eintrittszeitpunkt TVAL, charakterisierten Dopplersprungs benötigt wird.

Die Signallaufzeitwerte TPi werden derart ausgewertet, daß mittels Interpolation ein Zeitgradient gradTP bestimmt wird, aus dem der Kennwert des Betrages fVAL wie folgt abgeleitet wird, wobei f0 die Trägerfrequenz des Mobilfunksignales ist:

$$fVAL = 2 \cdot f0 \cdot gradTP.$$

Weiterhin wird mittels Extrapolation der abgespeicherten Signallaufzeitwerte der Kennwert des Eintrittszeitpunktes TVAL des zu erwartenden Dopplersprunges bestimmt, so daß im Graphen der Signallaufzeit der Schnittpunkt der verlängerten Interpolationsgeraden mit der Zeitachse den Eintrittszeitpunkt festlegt. Geht die Interpolationsgerade wie im Beispiel nach Fig. 1 durch den Signallaufzeitwert TP0, so bestimmt sich der Eintrittszeitpunkt des Dopplersprungs wie folgt:

TVAL = TP0 / gradTP.

Der aus den Kennwerten resultierende Zeitverlauf ADS der Dopplerverschiebung wird zur kompensierenden Vorwärtsregelung eines Sende- und Empfangsteiles, wie hier innerhalb der Funkfeststation, herangezogen.

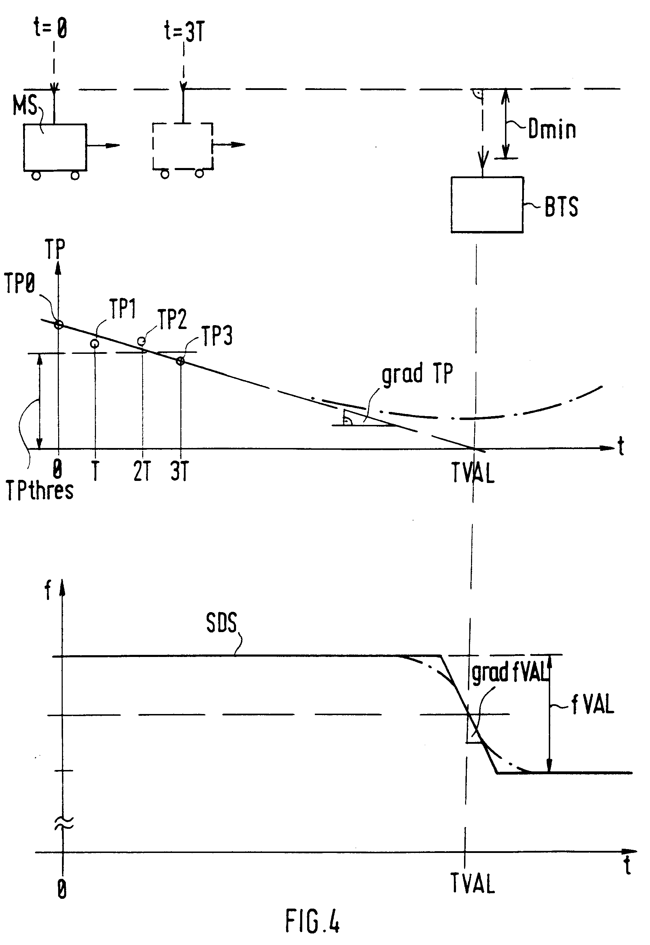

Das im folgenden unter Zuhilfenahme von Fig. 4 beschriebene Ausführungsbeispiel geht von einer zu erwartenden Vorbeifahrt einer Mobilstation MS an einer Funkfeststation BTS aus, wobei zwischen der Fahrstrecke der Mobilstation ein Mindestabstand Dmin zu der Funkfeststation besteht.

Der zu erwartende Zeitverlauf DS der Dopplerverschiebung wird sich als stetig differenzierbare Funktion darstellen und wird durch eine Rampenfunktion SDS angenähert werden. Zur Bestimmung der Kennwerte xVAL, die diese Rampenfunktion kennzeichnen, werden, wie schon vorher beschrieben, Signallaufzeitwerte TPi ermittelt und ausgewertet. Dabei werden, trotz einer sich nicht linear ändernden Signallaufzeit TP, eine lineare Interpolation und eine lineare Extrapolation durchgeführt. Die Rampenfunktion entspricht einem nichtidealen Dopplersprung mit einer endlichen Steigung grad fVAL.

Die aus den Signallaufzeitwerten TPi bestimmten Kennwerte fVAL; TVAL entsprechen, vergleichbar zum vorherigen Ausführungsbeispiel, dem Betrag fVAL oder dem Eintrittszeitpunkt TVAL des Dopplersprunges. Der jetzt zusätzliche Kennwert grad fVAL der Steigung kann wie folgt bestimmt werden:

grad fVAL = c . gradTP . gradTP . f0/Dmin.

Mittels der bestimmten Kennwerte erfolgt eine Kompensation der Dopplerverschiebung, wie bereits vorher beschrieben.

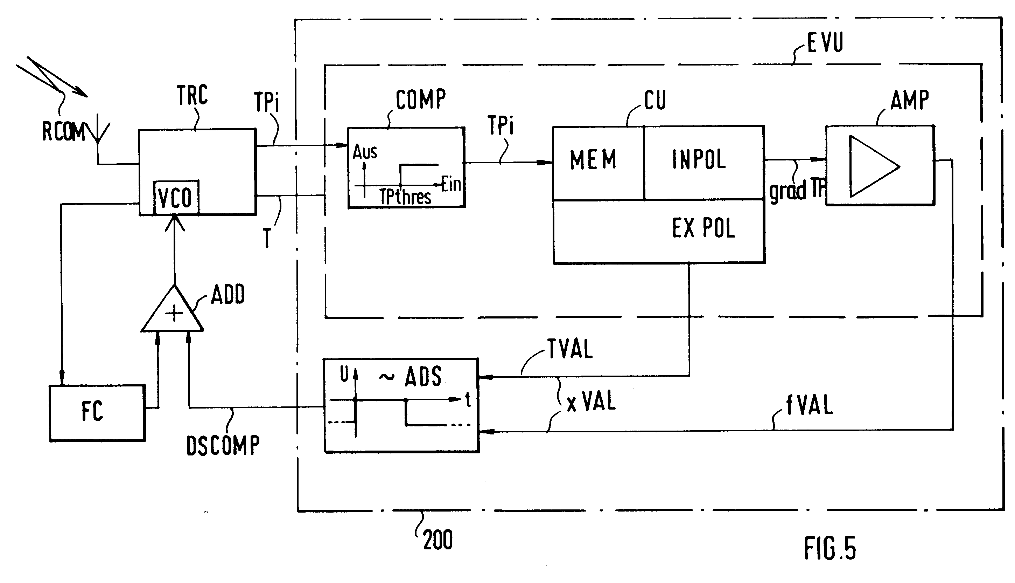

Eine Ausführungsform einer erfindungsgemäßen Schaltungsanordnung nach Fig. 5 zur Durchführung eines nach Fig. 3 skizzierten Verfahrens wird im weiteren beschrieben.

Die Schaltungsanordnung 200 umfaßt einen Funktionsgenerator FGEN und eine Auswertungseinheit EVU, die eine Vergleichsstufe COMP, eine Wichtungsstufe AMP und eine Rechnereinheit CU mit einem Speicher MEM enthält. Die Auswertungseinheit EVU ist mit einem Sende- und Empfangsteil TRC für das Mobilfunksignal RCOM verbunden. Der Auswertungseinheit ist der Funktionsgenerator FGEN nachgeschaltet. Das Sende- und Empfangsteil TRC ist weiterhin mit einer schon bekannten Kompensations-Stufe FC verbunden.

Sowohl der Ausgang der Kompensations-Stufe FC als auch der Ausgang des Funktionsgenerators FGEN sind auf eine Addierstufe ADD geführt, deren Ausgang mit einem, sich innerhalb des Sende- und Empfangsteils befindlichen, spannungsgesteuerten Oszillators VCO verbunden ist.

Die Auswerteeinheit bestimmt mittels abnehmender Signallaufzeitwerte TPi des Mobilfunksignals RCOM zwei Kennwerte xVAL; und zwar fVAL, TVAL, wie folgt:

In Zeitabständen T wird jeweils ein einzelner Signallaufzeitwert TPi von dem Sende- und Empfangsteil TRC für das Mobilfunksignal an die Vergleicherstufe COMP weitergeleitet. Dort wird dieser (aktuelle) Signallaufzeitwert TPi mit einem Schwellwert TPthres verglichen. Falls der aktuelle Signallaufzeitwert diesen Schwellwert TPthres nicht unterschreitet, wird der Signallaufzeitwert in den Speicher MEM der Rechneneinheit CU abgelegt.

Innerhalb der Rechneneinheit CU wird aus den abgespeicherten Signallaufzeitwerten TPi ein Zeitgradient gradTP der Signallaufzeit interpoliert. Somit steht am Ende einer Interpolationsroutine INPOL der Zeitgradient zur Verfügung. Durch eine nachfolgende Wichtung AMP dieses Zeitgradienten gradTP wird der Kennwert fVAL als Betrag eines zu erwartenden Dopplersprungs ADS bestimmt.

Der Kennwert TVAL als Eintrittszeitpunkt des Dopplersprungs wird aus einer Extrapolation EXPOL der Signallaufzeitwerte TPi innerhalb der Rechneneinheit CU ermittelt.

Am Ausgang der Auswertungseinheit EVU stehen beide obigen Kennwerte fVAL, TVAL zur Verfügung und werden an den Funktionsgenerator FGEN weitergeleitet, der aus beiden Kennwerten ein Steuerfunktionssignal DSCOMP bildet. Dieses ist eine Steuerspannung, deren Zeitverlauf dem invertierten Zeitverlauf ADS des Dopplersprungs folgt. Durch Steuerung des spannungsgesteuerten Oszillators VCO innerhalb einer Mischerstufe des Sende- und Empfangsteiles TRC wird eine Kompensation der sprungförmig verlaufenden Dopplerverschiebung im Mobilfunksignal erzielt.

In diesem Beispiel erfolgt die Kompensation "nur" empfangsseitig, so daß die Schaltungsanordnung jeweils in einer Demodulationsstufe der Mobilstation und der Funkfeststation eingesetzt wird. Die vorwärtsregelnde Schaltungsanordnung 200 ist zusammen mit der Kompensations-Stufe FC eingesetzt, die hier z.B. die schon erwähnte, herkömmliche Frequenz-Synchronisation mittels Frequenzkorrekturburst durchführt. Beide Korrektive sind über die Addierstufe ADD auf den Steuereingang des spannungsgesteuerten Oszillators VCO geführt.

Jeweils zu Beginn der Annäherung der Mobilstation an die (aktuelle) Funkfeststation wird die Schaltungsanordnung 200 zurückgesetzt, so daß das Steuerfunktionssignal DSCOMP zunächst identisch Null ist. Die Kompensations-Stufe FC führt die Frequenz-Synchronisation durch, so daß der spannungsgesteuerte Oszillator VCO auf eine Oszillatorfrequenz abgestimmt wird, die einer um die Dopplerfrequenz erhöhten Sollfrequenz entspricht.

Ab dem bestimmten Eintrittszeitpunkt TVAL wird mittels des Steuerfunktionssignales DSCOMP die Oszillatorfrequenz um die zweifache Dopplerfrequenz (Dopplersprungbetrag) erniedrigt. Schnelle und abrupte Änderung einer Dopplerverschiebung werden somit durch die erfindungsgemäße Schaltungsanordnung kompensiert und die herkömmliche Regelung ergänzt.

## Patentansprüche

1. Verfahren zur Kompensation einer Dopplerverschiebung in einem Mobilfunksignal (RCOM), zwischen einer Funkfeststation (BTS) und einer sich an letzterer vorbeibewegenden Mobilstation (MS), **gekennzeichnet durch** folgende Schritte:

   (1) mittels des Mobilfunksignals (RCOM), zwischen der Funkfeststation (BTS) und der sich ihr nähernden Mobilstation (MS), werden prädiktive Kennwerte (xVAL) bestimmt, die einen zu erwartenden Zeitverlauf (DS) der Dopplerverschiebung kennzeichnen;

   (2) mittels der Kennwerte erfolgt eine Vorwärtsregelung derart, daß die Dopplerverschiebung entsprechend dem Zeitverlauf kompensiert wird.

2. Verfahren nach Anspruch 1, dadurch gekennzeichnet,
   daß zwei prädiktive Kennwerte (xVAL) bestimmt werden, die den Zeitverlauf der Dopplerverschiebung als einen Dopplersprung (ADS) kennzeichnen, wobei
   der erste Kennwert (fVAL) den Betrag des Dopplersprunges kennzeichnet und
   der zweite Kennwert (TVAL) den Eintrittszeitpunkt des Dopplersprunges kennzeichnet.

3. Verfahren nach Anspruch 2,
   dadurch gekennzeichnet, daß
   die zwei prädiktiven Kennwerte (fVAL; TVAL) aus einer Auswertung der abnehmenden Signallaufzeit (TP) des Mobilfunksignals (RCOM) wie folgt bestimmt werden:
   - in Zeitabständen (T) wird jeweils ein Signallaufzeitwert (TPi) ermittelt und gespeichert, bis dieser einen Schwellwert (TPthres) unterschreitet;
   - mittels Interpolation der abgespeicherten Signallaufzeitwerte wird ein Zeitgradient (gradTP) der Signallaufzeit ermittelt, aus dem der erste Kennwert (fVAL) als Betrag des Dopplersprungs bestimmt wird;
   - mittels Extrapolation der gespeicherten Signallaufzeitwerte wird der zweite Kennwert (TVAL) als Eintrittszeitpunkt des Dopplersprungs derart bestimmt, daß zu dem Eintrittszeitpunkt die Signallaufzeit minimal ist.

4. Verfahren nach Anspruch 1,
   dadurch gekennzeichnet, daß
   drei prädiktive Kennwerte (xVAL) bestimmt werden, die den Zeitverlauf der Dopplerverschiebung als eine Rampenfunktion (SDS) kennzeichnen, wobei
   der erste Kennwert (fVAL) einen Betrag kennzeichnet, um den sich
   die Dopplerverschiebung maximal ändert, und
   der zweite Kennwert (TVAL) einen Eintrittszeitpunkt kennzeichnet, wann
   die Dopplerverschiebung zu Null wird, und
   der dritte Kennwert (grad fVAL) eine Steigung der Rampenfunktion kennzeichnet.

5. Schaltungsanordnung (200)
   zur Kompensation einer Dopplerverschiebung in einem Mobilfunksignal (RCOM), das sich zwischen einer Funkfeststation (BTS)
   und einer sich an letzterer vorbeibewegenden Mobilstation (MS) ausbreitet,
   **dadurch gekennzeichnet,** daß eine Auswertungseinheit (EVU) und ein Funktionsgenerator (FGEN) vorgesehen sind und:

(1) die Auswertungseinheit mittels des Mobilfunksignals (RCOM) prädiktive Kennwerte (xVAL) bestimmt, die einen zu erwartenden Zeitverlauf (DS) der Dopplerverschiebung kennzeichnen;

(2) der Funktionsgenerator mittels der Kennwerte ein Steuerfunktionssignal (DSCOMP) bildet, das ein Sende- und Empfangsteil (TRC) des Mobilfunksignals, entsprechend dem Zeitverlauf (DS), derart steuert, daß die Dopplerverschiebung kompensiert wird.

6. Schaltungsanordnung nach Anspruch 5, dadurch gekennzeichnet, daß
die Auswertungseinheit (EVU)
eine Vergleicherstufe (COMP),
eine Wichtungsstufe (AMP) und
eine Recheneinheit (CU) mit
einem Speicher (MEM) enthält, mittels denen
zwei prädiktive Kennwerte (xVAL), die den Zeitverlauf der Dopplerverschiebung als einen Dopplersprung (ADS) kennzeichnen, wie folgt ermittelt werden:

- die Vergleicherstufe (COMP) fragt in Zeitabständen (T) jeweils einen Signallaufzeitwert (TPi) des Mobilfunksignals (RCOM) aus dem Sende- und Empfangsteil (TRC) ab und gibt diesen an den Speicher (MEM) weiter, falls der jeweilige Signallaufzeitwert einen Schwellwert (TPthres) nicht unterschreitet;

- die abgespeicherten Signallaufzeitwerte werden aus dem Speicher in die Recheneinheit (CU) geladen, wo sie einer Interpolation (INPOL) und einer Extrapolation (EXPOL) unterzogen werden;

- mittels der Interpolation bestimmt die Recheneinheit (CU) einen Zeitgradienten (gradTP) der abgespeicherten Signallaufzeitwerte, der nach Wichtung mittels der Wichtungsstufe (AMP) einen ersten Kennwert (fVAL) als einen Betrag des Dopplersprungs bestimmt;

- mittels der Extrapolation wird ein zweiter Kennwert (TVAL) als einen Eintrittszeitpunkt des Dopplersprungs bestimmt.

FIG.1

FIG.2

FIG. 3

Start:

t, i = 0

TPthres, $f_c$ eingeben

Signallaufzeitwert ermitteln:

TPi = ?

TPi < TP thres ?

JA

NEIN

TPi speichern

$i = i + 1$
$t = t + T$

Zeitgradient interpolieren z.B.:

gradTP =
(TP0 - TPi)/i.T.

Betrag bestimmen:
fVAL = 2·f0·gradTP

Eintrittszeitpunkt extrapolieren z.B.
TVAL = TP0/gradTP

Vorwärtsregelung von TRC mittels Zeitverlauf
$ADS(t) = \begin{cases} fVAL/2; & t < TVAL \\ -fVAL/2; & t \geq TVAL \end{cases}$

FIG.4

FIG.5